# EUROPEAN PATENT SPECIFICATION

(11) **EP 4 648 024 B1**
(45) Date of publication and mention of the grant of the patent: **21.10.2026**
(21) Application number: 25160684.4
(22) Date of filing: 27.02.2025
(51) Int. Cl.: G06V 20/00, G06V 10/82

(54) **METHOD FOR DETECTING COPY PRODUCT, DEVICE, AND MEDIUM**
VERFAHREN ZUR ERKENNUNG EINES KOPIERPRODUKTS, VORRICHTUNG UND MEDIUM
PROCÉDÉ DE DÉTECTION DE PRODUIT DE COPIE, DISPOSITIF ET SUPPORT

(30) Priority: 10.05.2024 CN 202410572067
(43) Date of publication of application: 12.11.2025
(73) Proprietor: Quantum cloud code (Fujian) Technology Co., Ltd., Fuzhou, Fujian 530000 (CN)
(72) Inventor: CHENG, Ye, Fuzhou (Fujian), 530000 (CN); TANG, Qiaoti, Fuzhou (Fujian), 530000 (CN); CHENG, Libang, Fuzhou (Fujian), 530000 (CN); YAO, Qingyuan, Fuzhou (Fujian), 530000 (CN); NING, Yipeng, Fuzhou (Fujian), 530000 (CN); LAI, Pengxu, Fuzhou (Fujian), 530000 (CN); DU, Zongfei, Fuzhou (Fujian), 530000 (CN)
(74) Representative: Ipsilon

(56) References cited:
- CN-A- 116 167 807
- CN-A- 116 681 098
- JP-B2- 4 800 553
- US-A1- 2003 156 733
- US-A1- 2022 051 040
- US-A1- 2022 351 215
- US-A1- 2023 222 775

## Description

### TECHNICAL FIELD

The present application relates to the field of image detection technologies, and in particularly, to a method and apparatus for detecting a copy product a device, and a medium.

### BACKGROUND

In the fields of intellectual property protection, product anti-counterfeiting identification, and the like, the anti-copying technologies are used to process products of key concern to prevent the products from being illegally copied and are used to identify counterfeit products that are illegally copied.

In the related art, a common method is to add a complex watermark pattern to a product before printing, enable the printed product to carry the complex watermark pattern. The counterfeit product is then identified through the watermark pattern. However, with the continuous development of the high-precision printing device and the image-processing software, the complex watermark pattern is more easily restored and counterfeited, thereby resulting in a reduced accuracy in identifying the counterfeit product.
Further the relevant technologies are also known from US 2022/351215 A1 (RAMASUBRAMANIAN ANAND [US] ET AL) 3 November 2022 (2022-11-03) which relates to ONLINE TRANSACTION SYSTEM FOR IDENTIFYING COUNTERFEITS.
Further the relevant technologies are also known from US 2023/222775 A1 (STONEHOUSE JONATHAN RICHARD [GB]) 13 July 2023 (2023-07-13) which relates to METHODS AND SYSTEMS FOR ENABLING ROBUST AND COST-EFFECTIVE MASS DETECTION OF COUNTERFEITED PRODUCTS.

### SUMMARY

The invention is set out in the appended set of claims

### BRIEF DESCRIPTION OF THE DRAWINGS

In order to describe technical solutions in embodiments of the present application more clearly, the drawings used for describing the embodiments will be briefly described below. The drawings in the following description are merely some embodiments of the present application.
FIG. 1 is a flowchart of a method for detecting a copy product according to an embodiment of the present application;
FIG. 2 is a flowchart of a method for detecting a copy product according to an embodiment of the present application;
FIG. 3 is a flowchart of a method for detecting a copy product according to an embodiment of the present application;
FIG. 4 is a flowchart of a method for detecting a copy product according to an embodiment of the present application;
FIG. 5 is a schematic structural diagram of an apparatus for detecting a copy product according to an embodiment of the present application; and
FIG. 6 is a schematic structural diagram of an electronic device implementing a method for detecting a copy product according to an embodiment of the present application.

### DETAILED DESCRIPTION

In order that those skilled in the art will better understand solutions of the present application, technical solutions of embodiments of the present application will be clearly and completely described below in conjunction with the drawings of the embodiments of the present application.

It is to be noted that the terms "first", "second" and the like in the Description and claims of the present application, and in the foregoing drawings, are used for distinguishing between similar objects and not necessarily for describing a particular order or sequential order. It is to be understood that the data so used are interchangeable as appropriate so that the embodiments of the present application described herein can be implemented in an order other than those illustrated or described herein. Moreover, the terms "include" and "have" as well as any variations thereof, are intended to cover a non-exclusive inclusion, for example, a process, a method, a system, a product, or a device that includes a series of steps or units is not necessarily limited to those steps or units expressly listed, but may include other steps or units not expressly listed or inherent to such process, method, product, or device.

The acquisition, storage, application and the like of the to-be-detected product involved in the technical solutions of the embodiments of the present application all conform to the regulations of relevant laws and regulations, and do not violate the customs of public order.

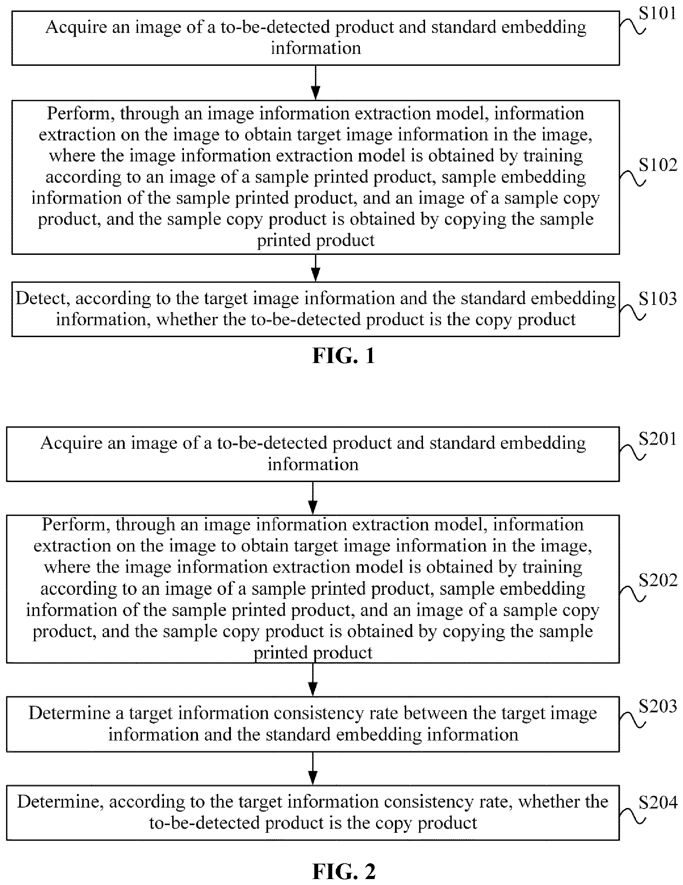

FIG. 1 is a flowchart of a method for detecting a copy product according to an embodiment of the present application. This embodiment is applicable to a situation of detecting whether a product is the copy product. The method may be performed by an apparatus for detecting a copy product. The apparatus for detecting the copy product may be implemented in a form of hardware and/or software and may be configured in an electronic device such as a server.

Referring to the method for detecting the copy product shown in FIG. 1, the method includes steps described below.

In S101, an image of a to-be-detected product and standard embedding information are acquired.

In this embodiment, the to-be-detected product may be a product that is to be subjected to the detection of the copy product. The to-be-detected product may be, for example, a printed matter such as a book, a newspaper, a poster, a certificate, and a package. Specific types of the to-be-detected product are not limited in the present application. An image of the to-be-detected product may be obtained by shooting via an image acquisition device, or may be obtained from an image library containing multiple images. In some embodiments, an image of a to-be-detected product that is shot by a user may be acquired, or an image of a to-be-detected product that is uploaded from a photo album by the user may be acquired.

The standard embedding information may be information embedded into the printed product. The printed product may be understood as a product obtained by printing. The standard embedding information may be represented in a matrix form. Optionally, one or more pieces of standard embedding information may be provided. In some embodiments, those skilled in the art autonomously sets at least one piece of candidate embedding information according to actual requirements or practical experience and configures the at least one piece of candidate embedding information in embedded configuration information. In an optional embodiment, the embedded configuration information may be configured with an association relationship between identification information of the to-be-detected product and the candidate embedding information, the identification information of the to-be-detected product may be acquired, candidate identification information of the to-be-detected product is queried from the embedded configuration information, and the queried candidate embedding information is used as the standard embedding information. In another optional embodiment, each piece of candidate configuration information in the embedded configuration information is the standard embedding information, where the embedded configuration information is not configured with an association relationship between identification information of the to-be-detected product and the candidate embedding information.

In S102, information extraction is performed on the image through an image information extraction model to obtain target image information in the image, where the image information extraction model is obtained by training according to an image of a sample printed product, sample embedding information of the sample printed product, and an image of a sample copy product, and the sample copy product is obtained by copying the sample printed product.

In this embodiment, the image information extraction model may be a neural network model, and the image information extraction model may include, but is not limited to, a convolutional layer, a fully-connected layer, an activation layer, and the like and may be configured to extract image information from the image of the to-be-detected product. The target image information may be information extracted from the image of the to-be-detected product and may be represented in the matrix form. The sample printed product may be a printed product in which a corresponding image is used for training the image information extraction model, and the sample copy product may be a product obtained by copying the sample printed product. The sample embedding information may be information embedded into the sample printed product.

In S103, whether the to-be-detected product is the copy product is detected according to the target image information and the standard embedding information.

In this embodiment, the copy product refers to a product obtained by copying. For example, whether the to-be-detected product is the copy product is detected by using a certain algorithm according to the target image information and the standard embedding information.

In an optional embodiment, detecting, according to the target image information and the standard embedding information, whether the to-be-detected product is the copy product includes: determining a cosine similarity between the target image information and the standard embedding information; if the determined cosine similarity is greater than or equal to a preset similarity threshold, determining a detection result of the to-be-detected product as the printed product; and if the determined cosine similarity is less than the preset similarity threshold, determining a detection result of the to-be-detected product as the copy product.

In another optional embodiment, detecting, according to the target image information and the standard embedding information, whether the to-be-detected product is the copy product includes: determining an Euclidean distance between the target image information and the standard embedding information; if the determined Euclidean distance is less than a preset distance threshold, determining a detection result of the to-be-detected product as the printed product; and if the determined cosine similarity is greater than or equal to the preset similarity threshold, determining a detection result of the to-be-detected product as the copy product.

According to the embodiments of the present application, the image of the to-be-detected product and the standard embedding information are acquired; the information extraction is performed on the image through the image information extraction model to obtain the target image information in the image, where the image information extraction model is obtained by training according to the image of the sample printed product, the sample embedding information of the sample printed product, and the image of the sample copy product, and the sample copy product is obtained by copying the sample printed product; and whether the to-be-detected product is the copy product is detected according to the target image information and the standard embedding information. In the embodiments of the present application, the image information extraction model is obtained by training the image of the sample printed product, the image of the sample copy product and the sample embedding information, so that the target image information which is accurate and is capable of distinguishing the printed product from the copy product can be extracted from the to-be-detected image through the image information extraction model, and further the to-be-detected product is detected according to the target image information and the standard embedding information, thereby improving the accuracy of detecting the copy product.

FIG. 2 is a flowchart of a method for detecting a copy product according to an embodiment of the present application, and on the basis of the technical solutions of the above-described embodiments, a detection operation of the copy product is optimized and improved in this embodiment of the present application.

Further, the step of "detecting, according to the target image information and the standard embedding information, whether the to-be-detected product is the copy product" is refined into steps of "determining a target information consistency rate between the target image information and the standard embedding information; and determining, according to the target information consistency rate, whether the to-be-detected product is the copy product" to facilitate the detection operation of the copy product.

It is to be noted that for the parts not described in detail in the embodiments of the present application, reference may be made to the expressions in the above-described embodiments.

Referring to the method for detecting the copy product shown in FIG. 2, the method includes steps described below.

In S201, an image of a to-be-detected product and standard embedding information are acquired.

In S202, information extraction is performed on the image through an image information extraction model to obtain target image information in the image, where the image information extraction model is obtained by training according to an image of a sample printed product, sample embedding information of the sample printed product, and an image of a sample copy product, and the sample copy product is obtained by copying the sample printed product.

In S203, a target information consistency rate between the target image information and the standard embedding information is determined.

In this embodiment, the target information consistency rate may refer to a proportion of elements that are the same between the target image information and the standard embedding information. For example, the target information consistency rate between the target image information and the standard embedding information is determined by using a certain algorithm.

Optionally, each of the target image information and the standard embedding information is in a matrix form. Determining the target information consistency rate between the target image information and the standard embedding information includes: for each target image element in the target image information, determining a respective standard embedding element in the standard embedding information which is at a same position as the target image element in the target image information; comparing a value of the target image element with a value of the standard embedding element to obtain a comparison result; and determining, according to the comparison result, the target information consistency rate between the target image information and the standard embedding information.

The comparison result may include "consistent" and "inconsistent". The target image information has the same size as the standard embedding information. For example, for each target image element in the target image information, the standard embedding element in the standard embedding information is determined, where the standard embedding element is at the same position as the target image element in the target image information; the value of the target image element is compared with the value of the standard embedding element to obtain the comparison result; the first number of target image elements with a consistent comparison result in the target image information and a total number of target image elements in the target image information are counted; and a ratio of the first number to the total number is determined as the target information consistency rate.

It is to be understood that the above-described technical solutions are adopted, so that the target information consistency rate between the target image information and the standard embedding information may be determined according to a comparison result which is determined by comparing the value of the target image element in the target image information with the value of the standard embedding element in the standard embedding information which is at the same position as the target image element in the target image information. If the value of the target image element in the target image information and the value of the standard embedding element in the standard embedding information are the same, the comparison result is consistent; if the value of the target image element in the target image information and the value of the standard embedding element in the standard embedding information are different, the comparison result is inconsistent, whereby the accuracy of the target information consistency rate is improved.

In S204, whether the to-be-detected product is the copy product is determined according to the target information consistency rate.

For example, if the target information consistency rate is greater than or equal to a preset consistency rate threshold, the to-be-detected product is determined as the printed product; if the target information consistency rate is less than the preset consistency rate threshold, the to-be-detected product is determined as the copy product.

According to the embodiments of the present application, the target information consistency rate between the target image information and the standard embedding information may be determined according to the comparison results. If the value of the target image element in the target image information and the value of the standard embedding element in the standard embedding information are the same, the comparison result is consistent; if the value of the target image element in the target image information and the value of the standard embedding element in the standard embedding information are different, the comparison result is inconsistent, whereby the accuracy of the target information consistency rate is improved. Furthermore, whether the to-be-detected product is the printed product or the copy product is distinguished accurately according to the target information consistency rate, whereby the accuracy of detecting the to-be-detected product is improved.

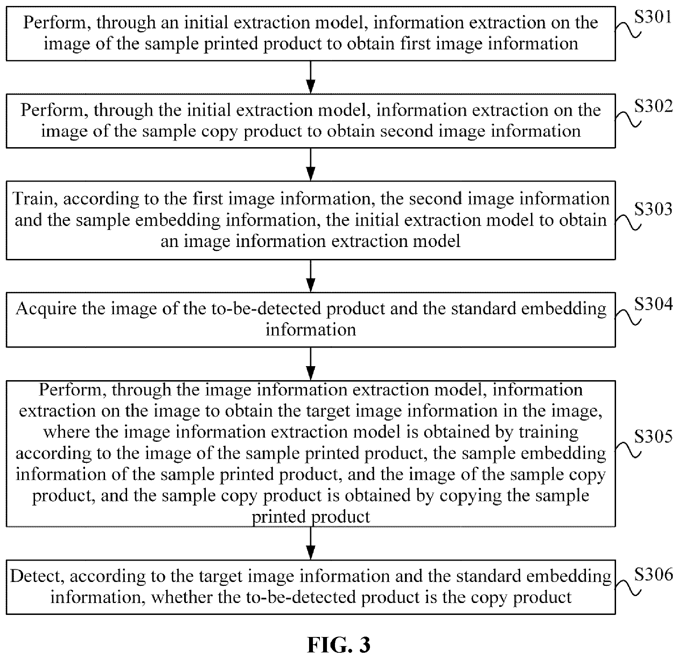

FIG. 3 is a flowchart of a method for detecting a copy product according to an embodiment of the present application. This embodiment of the present application is additionally optimized on the basis of the technical solutions of the above-described embodiments.

Further, the following additional features are added, i.e., "performing, through an initial extraction model, information extraction on the image of the sample printed product to obtain first image information; performing, through the initial extraction model, information extraction on the image of the sample copy product to obtain second image information; and training, according to the first image information, the second image information and the sample embedding information, the initial extraction model to obtain an image information extraction model", whereby a training operation of the image information extraction model is improved.

It is to be noted that for the parts not described in detail in the embodiments of the present application, reference may be made to the expressions in the above-described embodiments.

Referring to the method for detecting the copy product shown in FIG. 3, the method includes steps described below.

In S301, information extraction is performed on the image of the sample printed product through an initial extraction model to obtain first image information.

In this embodiment, the initial extraction model may be an initialized, untrained information extraction model. The first image information may be information extracted from the image of the sample printed product, and the first image information may be represented in a matrix form.

In S302, information extraction is performed on the image of the sample copy product through the initial extraction model to obtain second image information.

In this embodiment, the second image information may be information extracted from the image of the sample printed product, and the second image information may be represented in the matrix form.

In S303, the initial extraction model is trained according to the first image information, the second image information and the sample embedding information to obtain an image information extraction model.

For example, the initial extraction model is trained by using a certain algorithm and according to the first image information, the second image information and the sample embedding information to obtain the image information extraction model.

Optionally, training, according to the first image information, the second image information and the sample embedding information, the initial extraction model to obtain the image information extraction model includes: determining a first information consistency rate between the first image information and the sample embedding information and a second information consistency rate between the second image information and the sample embedding information; and training, with a purpose of maximizing the first information consistency rate and minimizing the second information consistency rate, the initial extraction model to obtain the image information extraction model.

The first information consistency rate may refer to a ratio of elements that are the same between the first image information and the standard embedding information, and the second information consistency rate may refer to a ratio of elements that are the same between the second image information and the standard embedding information. It is to be noted that, a flow of determining the first information consistency rate is similar to a flow of determining the target information consistency rate, and a flow of determining the second information consistency rate is similar to a flow of determining the target information consistency rate, which are not to be detailed here again.

For example, a target function is constructed to maximize the first information consistency rate and minimize the second information consistency rate, and the initial extraction model is trained according to the target function to obtain an image extraction model.

In an optional embodiment, the target function may be determined by the following formula: $L = A - B ;$ where L represents the target function; A represents the first information consistency rate, and B represents the second information consistency rate. With the purpose of maximizing a value of the target function, the initial extraction model is trained until the value of the target function is greater than a preset training threshold. The initial extraction model obtained when the value of the target function is greater than the preset training threshold is determined as the image extraction model. It is to be noted that, the preset training threshold may be autonomously set by those skilled in the art according to actual requirements or actual experience, which is not limited in the present application.

It is to be noted that S301, S302 and S303 are performed only once, and S301, S302 and S303 are intended for obtaining the image extraction model by training according to the image of the sample printed product, the sample embedding information of the sample printed product, and the image of the sample copy product in advance. So that information extraction is directly performed on an image of a to-be-detected product through the trained image extraction model, thereby improving the efficiency of obtaining target image information and the efficiency of detecting the to-be-detected product.

In S304, the image of the to-be-detected product and the standard embedding information are acquired.

In S305, information extraction is performed on the image through the image information extraction model to obtain the target image information in the image, where the image information extraction model is obtained by training according to the image of the sample printed product, the sample embedding information of the sample printed product, and the image of the sample copy product, and the sample copy product is obtained by copying the sample printed product.

In S306, whether the to-be-detected product is the copy product is detected according to the target image information and the standard embedding information.

According to the embodiments of the present application, the information extraction is performed on the image of the sample printed product through the initial extraction model to obtain the first image information; the information extraction is performed on the image of the sample copy product through the initial extraction model to obtain the second image information; the initial extraction model is trained according to the first image information, the second image information and the sample embedding information, so that the image information extracted through the image information extraction model obtained by training is relatively high in the consistency rate with image information of the printed product and is relatively low in the consistency rate with image information of the copy product, whereby the printed product and the copy product may be distinguished according to the image information extracted through the image information extraction model and the standard embedding information, and further the accuracy of detecting the to-be-detected product according to the image information extraction model is improved.

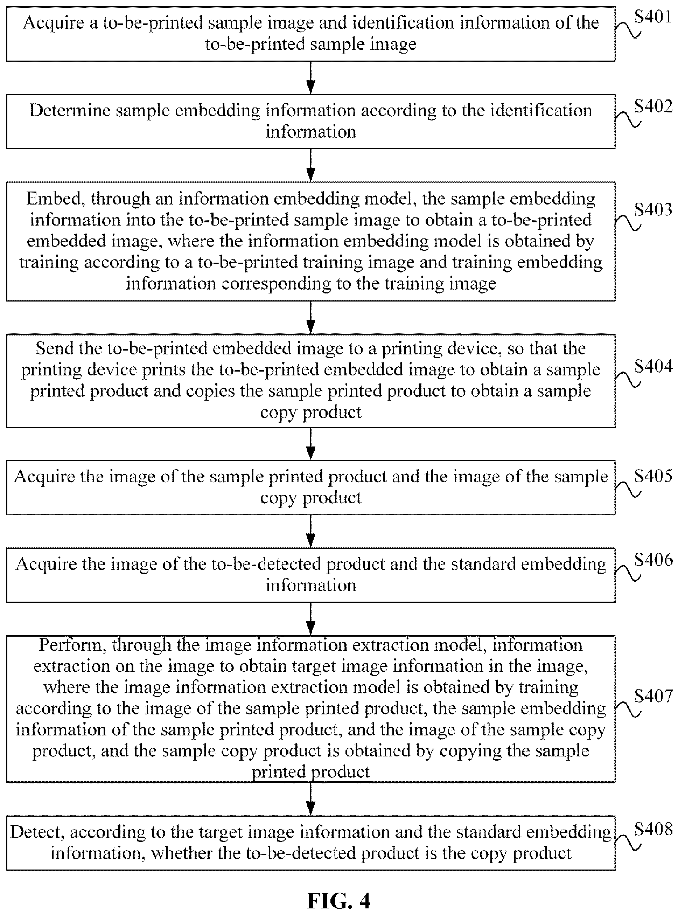

FIG. 4 is a flowchart of a method for detecting a copy product according to an embodiment of the present application. This embodiment of the present application is additionally optimized on the basis of the technical solutions of the above-described embodiments.

Before "acquiring the image of the to-be-detected product and the standard embedding information", the following additional features are added, i.e., "acquiring a to-be-printed sample image and identification information of the to-be-printed sample image; determining the sample embedding information according to the identification information; embedding, through an information embedding model, the sample embedding information into the to-be-printed sample image to obtain a to-be-printed embedded image, where the information embedding model is obtained by training according to a to-be-printed training image and training embedding information corresponding to the training image; sending the to-be-printed embedded image to a printing device, so that the printing device prints the to-be-printed embedded image to obtain a sample printed product and copies the sample printed product to obtain a sample copy product; and acquiring the image of the sample printed product and the image of the sample copy product. ".

It is to be noted that for the parts not described in detail in the embodiments of the present application, reference may be made to the expressions in the above-described embodiments.

Referring to the method for detecting the copy product shown in FIG. 4, the method includes steps described below.

In S401, a to-be-printed sample image and identification information of the to-be-printed sample image are acquired.

In this embodiment, the to-be-printed sample image may be an electronic image that has not yet been printed, and the identification information may be used to uniquely identify the to-be-printed sample image.

In S402, sample embedding information is determined according to the identification information.

In this embodiment, the sample embedding information may be information for embedding in the to-be-printed sample image. For example, according to the identification information of the to-be-printed sample image, candidate embedding information matching the identification information of the to-be-printed sample image is queried from preset embedded configuration information; and the queried and matched candidate embedding information is determined as the sample embedding information.

In S403, the sample embedding information is embedded into the to-be-printed sample image through an information embedding model to obtain a to-be-printed embedded image, where the information embedding model is obtained by training according to a to-be-printed training image and training embedding information corresponding to the to-be-printed training image.

In this embodiment, the information embedding model may be a neural network model and may include, but is not limited to, a convolutional layer, a fully-connected layer, an activation layer, and the like. The information embedding model may be configured to process the sample embedding information and the to-be-printed sample image which are input and output a to-be-printed sample image embedding with the sample embedding information. The to-be-printed embedded image may be a to-be-printed sample image embedding with the sample embedding information, and the to-be-printed embedded image has the same size as the to-be-printed sample image. The to-be-printed training image may be an image used for obtaining the information embedding model by training, and the training embedding information may be information to be embedded in the to-be-printed training image and may be represented in a matrix form.

The information embedding model is obtained by training in the following manner: embedding, through an initial embedding model, the training embedding information into the to-be-printed training image to obtain a training embedded image;
determining a difference degree between the to-be-printed training image and the training embedded image; and training, according to the difference degree, the initial embedding model to obtain the information embedding model.

The training embedding information may be information to be embedded in the to-be-printed training image, and the training embedded image may be a to-be-printed training image embedding with the training embedding information. It is to be noted that, a flow of obtaining the training embedded image is similar to a flow of obtaining the to-be-printed embedded image, which is not to be detailed here again. For each pixel point in the to-be-printed training image, a co-located pixel point in the training embedded image which is at the same position as the pixel point is determined; a pixel difference value between a pixel value of the pixel point and a pixel value of the co-located pixel point is determined; the difference degree between the to-be-printed training image and the training embedded image is determined according to the pixel difference value; and with the purpose of minimizing the difference degree, the initial embedding model is trained to obtain the information embedding model.

It is to be noted that, a flow of embedding, through the initial embedding model, the training embedding information into the to-be-printed training image to obtain the training embedded image; determining the difference degree between the to-be-printed training image and the training embedded image; and training, according to the difference degree, the initial embedding model to obtain the information embedding model is performed only once, and the flow is used for training the initial embedding model in advance to obtain the information embedding model, so that the sample embedding information is embedded into the to-be-printed sample image according to the trained information embedding model to obtain the to-be-printed embedded image, thereby improving the efficiency of obtaining the to-be-printed embedded image.

It is to be understood that, the above-described technical solutions are adopted, so that the difference degree between the to-be-printed training image and the training embedded image is determined, and the initial embedding model is trained according to the difference degree to obtain the information embedding model, whereby the difference degree between the to-be-printed training image and the training embedded image can be reduced in a case of ensuring that information is embedded into the to-be-printed training image, thereby improving a degree of similarity between the to-be-printed training image and the training embedded image, improving the safety of the product, and avoiding the distortion of the training embedded image.

In S404, the to-be-printed embedded image is sent to a printing device, so that the printing device prints the to-be-printed embedded image to obtain a sample printed product and copies the sample printed product to obtain a sample copy product.

In this embodiment, the printing device may be a device having a printing function and a copying function. The printing device is communicatively connected to a device on which the method for detecting the copy product according to the embodiments of the present application is deployed.

In S405, the image of the sample printed product and the image of the sample copy product are acquired.

It is to be noted that S401, S402, S403, S404, and S405 are performed only once, and S401, S402, S403, S404, and S405 are intended for: acquiring the to-be-printed sample image and the identification information of the to-be-printed sample image in advance; determining the sample embedding information according to the identification information; embedding, through the information embedding model, the sample embedding information into the to-be-printed sample image to obtain the to-be-printed embedded image, where the information embedding model is obtained by training according to the to-be-printed training image and the training embedding information corresponding to the training image; sending the to-be-printed embedded image to the printing device so that the printing device prints the to-be-printed embedded image to obtain the sample printed product and copies the sample printed product to obtain the sample copy product, in this way, the image information extraction model may be trained directly according to the acquired image of the sample printed product and the image of the sample copy product, thereby improving the training efficiency of the image extraction model, and further improving the efficiency of detecting the to-be-detected product.

In S406, the image of the to-be-detected product and the standard embedding information are acquired.

In S407, information extraction is performed on the image through the image information extraction model to obtain target image information in the image, where the image information extraction model is obtained by training according to the image of the sample printed product, the sample embedding information of the sample printed product, and the image of the sample copy product, and the sample copy product is obtained by copying the sample printed product.

In S408, whether the to-be-detected product is the copy product is detected according to the target image information and the standard embedding information.

According to the embodiments of the present application, the to-be-printed sample image and the identification information of the to-be-printed sample image are determined; the sample embedding information is determined according to the identification information; the sample embedding information is embedded into the to-be-printed sample image through the information embedding model to obtain the to-be-printed embedded image, where the information embedding model is obtained by training according to the to-be-printed training image and the training embedding information corresponding to the training image; the to-be-printed embedded image is sent to the printing device, so that the printing device prints the to-be-printed embedded image to obtain the sample printed product and copies the sample printed product to obtain the sample copy product; and the image of the sample printed product and the image of the sample copy product are acquired, in this way, the image information extraction model may be trained directly according to the acquired image of the sample printed product and the image of the sample copy product, thereby improving the training efficiency of the image extraction model, and further improving the efficiency of detecting the to-be-detected product.

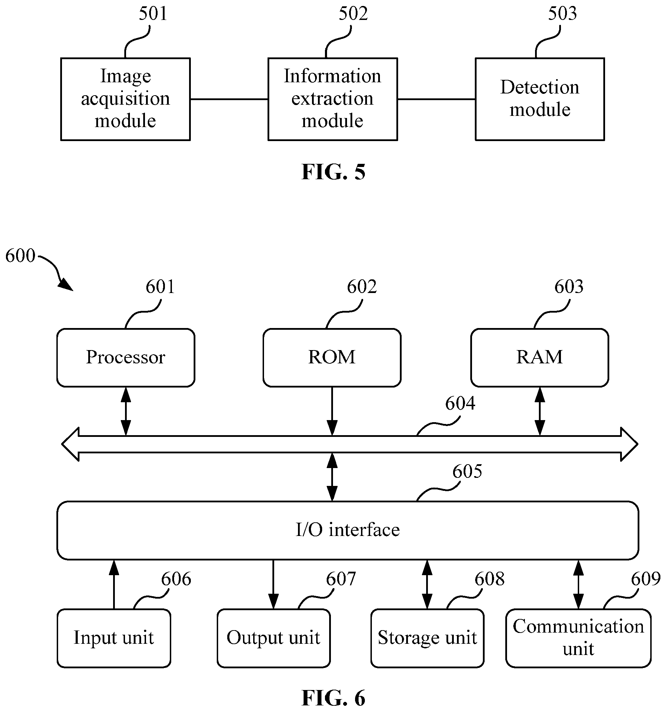

FIG. 5 is a schematic structural diagram of an apparatus for detecting a copy product according to an embodiment of the present application. This embodiment is applicable to a situation of detecting whether a product is the copy product. The apparatus may perform the method for detecting the copy product. The apparatus for detecting the copy product may be implemented in a form of hardware and/or software and may be configured in an electronic device such as a server.

Referring to the apparatus for detecting the copy product shown in FIG. 5, the apparatus includes an image acquisition module 501, an information extraction module 502 and a detection module 503. The image acquisition module 501 is configured to acquire an image of a to-be-detected product and standard embedding information. The information extraction module 502 is configured to perform, through an image information extraction model, information extraction on the image to obtain target image information in the image, where the image information extraction model is obtained by training according to an image of a sample printed product, sample embedding information of the sample printed product, and an image of a sample copy product, and the sample copy product is obtained by copying the sample printed product. The detection module 503 is configured to detect, according to the target image information and the standard embedding information, whether the to-be-detected product is the copy product.

According to the embodiments of the present application, the image acquisition module is configured to acquire the image of the to-be-detected product and the standard embedding information; the information extraction module is configured to perform, through the image information extraction model, the information extraction on the image to obtain the target image information in the image, where the image information extraction model is obtained by training according to the image of the sample printed product, the sample embedding information of the sample printed product, and the image of the sample copy product, and the sample copy product is obtained by copying the sample printed product; and the detection module is configured to detect, according to the target image information and the standard embedding information, whether the to-be-detected product is the copy product. In the embodiments of the present application, the image information extraction model is obtained by training the image of the sample printed product, the image of the sample copy product and the sample embedding information, so that the target image information which is accurate and is capable of distinguishing the printed product from the copy product can be extracted from the to-be-detected image through the image information extraction model, and further the to-be-detected product is detected according to the target image information and the standard embedding information, thereby improving the accuracy of detecting the copy product.

Optionally, the detection module 503 includes a target consistency rate determination unit and a detection unit. The target consistency rate determination unit is configured to determine a target information consistency rate between the target image information and the standard embedding information. The detection unit is configured to determine, according to the target information consistency rate, whether the to-be-detected product is the copy product
Optionally, each of the target image information and the standard embedding information is in a matrix form, and the target consistency rate determination unit includes an element determination sub-unit, a comparison result determination sub-unit and a consistency rate determination sub-unit. The element determination sub-unit is configured to for each target image element in the target image information, determine a standard embedding element in the standard embedding information which is at a same position as the target image element. The comparison result determination sub-unit is configured to compare a value of the target image element with a value of the standard embedding element to obtain a comparison result. The consistency rate determination sub-unit is configured to determine, according to the comparison result, the target information consistency rate between the target image information and the standard embedding information.

Optionally, the apparatus further includes a first information extraction module, a second information extraction module and an extraction model training module. The first information extraction module is configured to perform, through an initial extraction model, information extraction on the image of the sample printed product to obtain first image information. The second information extraction module is configured to perform, through the initial extraction model, information extraction on the image of the sample copy product to obtain second image information. The extraction model training module is configured to train, according to the first image information, the second image information and the sample embedding information, the initial extraction model to obtain the image information extraction model.

Optionally, the extraction model training module includes a consistency rate determination unit and an extraction module training unit. The consistency rate determination unit is configured to determine a first information consistency rate between the first image information and the sample embedding information and a second information consistency rate between the second image information and the sample embedding information. The extraction module training unit is configured to train, with the purpose of maximizing the first information consistency rate and minimizing the second information consistency rate, the initial extraction model to obtain the image information extraction model.

Optionally, the apparatus further includes an identification information acquisition module, an embedding information determination module, an information embedding module, an image sending module and a sample image acquisition module. The identification information acquisition module is configured to acquire a to-be-printed sample image and identification information of the to-be-printed sample image. The embedding information determination module is configured to determine the sample embedding information according to the identification information. The information embedding module is configured to embed, through an information embedding model, the sample embedding information into the to-be-printed sample image to obtain a to-be-printed embedded image, where the information embedding model is obtained by training according to a to-be-printed training image and training embedding information corresponding to the training image. The image sending module is configured to send the to-be-printed embedded image to a printing device so that the printing device prints the to-be-printed embedded image to obtain a sample printed product and copies the sample printed product to obtain a sample copy product. The sample image acquisition module is configured to acquire the image of the sample printed product and the image of the sample copy product.

Optionally, the apparatus further includes a training image determination module, a difference degree determination module and an embedded model training module. The training image determination module is configured to embed, through an initial embedding model, the training embedding information into the to-be-printed training image to obtain a training embedded image. The difference degree determination module is configured to determine a difference degree between the to-be-printed training image and the training embedded image. The embedded model training module is configured to train, according to the difference degree, the initial embedding model to obtain the information embedding model.

The apparatus for detecting the copy product provided in the embodiments of the present application may perform the method for detecting the copy product provided in any of the embodiments of the present application, and has corresponding functional modules and beneficial effects for performing the method for detecting the copy product.

FIG. 6 shows a schematic structural diagram of an electronic device 600 for implementing an embodiment of the present application. The electronic device is intended to represent various forms of digital computers, such as laptops, desktops, workstations, personal digital assistants, servers, blade servers, mainframe computers, and other appropriate computers. The electronic device may also represent various forms of mobile apparatuses, such as personal digital processing, cellphones, smartphones, wearable devices (such as helmets, glasses, watches), and other similar calculation apparatuses. The components shown herein, their connections and relationships between these components, and the functions of these components, are illustrative merely and are not intended to limit the implementations of the present application described and/or claimed herein.

As shown in FIG. 6, the electronic device 600 includes at least one processor 601 and a memory communicatively connected to the at least one processor 601, such as a read-only memory (ROM) 602 and a random access memory (RAM) 603. The memory stores a computer program that may be executed by the at least one processor. The processor 601 may perform various appropriate actions and processes according to a computer program stored in the read-only memory (ROM) 602 or a computer program loaded from a storage unit 608 into the random access memory (RAM) 603. Various programs and data required for the operation of the electronic device 600 may also be stored in the RAM 603. The processor 601, the ROM 602 and the RAM 603 are connected to each other via a bus 604. An input/output (I/O) interface 605 is also connected to the bus 604.

Multiple components in the electronic device 600 are connected to the I/O interface 605, and the multiple components include: an input unit 606 such as a keyboard or a mouse; an output unit 607 such as various types of displays or speakers; the storage unit 608 such as a magnetic disk or an optical disk; and a communication unit 609 such as a network card, a modem or a wireless communication transceiver. The communication unit 609 allows the electronic device 600 to exchange information/data with other devices over a computer network such as the Internet and/or various telecommunication networks.

The processor 601 may be a variety of general-purpose and/or dedicated processing assemblies having processing and calculating capabilities. Some examples of the processor 601 include, but are not limited to, a central processing unit (CPU), a graphics processing unit (GPU), a variety of special-purpose artificial intelligence (AI) calculation chips, a variety of processors executing a machine learning model algorithm, a digital signal processor (DSP), and any suitable processor, controller and microcontroller. The processor 601 performs the various methods and processes described above, such as the method for detecting the copy product.

In some embodiments, the method for detecting the copy product may be implemented as a computer program that is physically contained in a computer-readable storage medium such as the storage unit 608. In some embodiments, part or all of computer programs may be loaded and/or installed on the electronic device 600 via the ROM 702 and/or the communication unit 609. When the computer program is loaded onto the RAM 603 and executed by the processor 601, one or more steps of the method for detecting the copy product described above may be performed. Alternatively, in other embodiments, the processor 601 may be configured, in any other suitable manners (such as, by means of firmware), to perform the method for detecting the copy product.

Various embodiments of the system and the technology described above herein may be achieved in digital electronic circuit systems, integrated circuit systems, field-programmable gate arrays (FPGAs), application-specific integrated circuits (ASICs), application-specific standard products (ASSPs), systems on chip (SOCs), complex programmable logic devices (CPLDs), computer hardware, firmware, software, and/or combinations thereof. These various embodiments may include embodiment implemented in one or more computer programs, and the one or more computer programs are executable and/or interpretable on a programmable system including at least one programmable processor, the programmable processor may be a special-purpose or general-purpose programmable processor for receiving data and instructions from a memory system, at least one input apparatus and at least one output apparatus and transmitting the data and instructions to the memory system, the at least one input apparatus and the at least one output apparatus.

Computer programs for implementing the methods of the present application may be written in any combination of one or more programming languages. These computer programs may be provided to a general-purpose computer, a special-purpose computer, or other processors that may program the apparatus for detecting the copy product, to enable the functions/operations specified in a flowchart and/or a block diagram to be implemented when the computer program is executed by the processor. The computer program may be executed entirely on a machine, partly on the machine, as a stand-alone software package, partly on the machine and partly on a remote machine, or entirely on the remote machine or server.

In the context of the present application, the computer-readable storage medium may be a tangible medium that may contain or store a computer program for use by or in connection with an instruction execution system, apparatus, or device. The computer-readable storage medium may include, but is not limited to, an electronic, magnetic, optical, electromagnetic, infrared, or semiconductor system, apparatus, or device, or any appropriate combination of the foregoing. Alternatively, the computer-readable storage medium may be a machine-readable signal medium. More specific examples of the machine-readable storage medium may include an electrical connection based on one or more wires, a portable computer diskette, a hard disk, a random access memory (RAM), a read-only memory (ROM), an erasable programmable read-only memory (EPROM or flash memory), an optical fiber, a compact disc read-only memory (CD-ROM), an optical storage device, a magnetic storage device, or any suitable combination of the foregoing.

To provide the interaction with a user, the systems and technologies described here may be implemented on the electronic device. The electronic device has a display device (such as, a cathode-ray tube (CRT) or liquid-crystal display (LCD) monitor) for displaying information to the user; and a keyboard and a pointing apparatus (such as, a mouse or a trackball) through which the user may provide input to the computer. Other kinds of apparatuses may also be used for providing for interaction with the user; for example, feedback provided to the user may be sensory feedback in any form (such as, visual feedback, auditory feedback, or haptic feedback); and input from the user may be received in any form (including acoustic input, speech input, or haptic input).

The systems and technologies described here may be implemented in a calculation system including a back-end component (such as, a data server), or a calculation system including a middleware component (such as, an application server), or a calculation system including a front-end component (such as, a client computer having a graphical user interface or a web browser through which the user may interact with the embodiments of the systems and technologies described herein), or a calculation system including any combination of such back-end component, middleware component, or front-end component. The components of the system may be interconnected by any form or medium of digital data communication (such as, a communication network). Examples of the communication network include a local area network (LAN), a wide area network (WAN), a blockchain network and the Internet.

The calculation system may include a client and a server. The client and the server are generally facing away from each other and typically interact through the communication network. A relationship between the client and the server arises by virtue of computer programs running on respective computers and having a client-server relationship to each other. The server may be a cloud server, also referred to as a cloud calculation server or a cloud host. As a host product in a cloud calculation service system, the server solves the defects of difficult management and weak service scalability in a traditional physical host and a virtual private server (VPS) service.

It is to be understood that various forms of flows, reordering, adding or deleting steps described above may be used. For example, the steps recited in the present application may be executed in parallel, sequentially or in different orders as long as the desired result of the technical solutions of the present application may be achieved, which is not limited herein.

## Claims

1. A method for detecting a copy product, comprising:
acquiring an image of a to-be-detected product and standard embedding information (S101, S201, S304, S406);
performing, through an image information extraction model, information extraction on the image to obtain target image information in the image, wherein the image information extraction model is obtained by training according to an image of a sample printed product, sample embedding information of the sample printed product, and an image of a sample copy product, and the sample copy product is obtained by copying the sample printed product (S102, S202, S305, S407); and
detecting, according to the target image information and the standard embedding information, whether the to-be-detected product is the copy product (S103, S306, S408);
wherein the method is **characterized by** further comprising:
before acquiring the image of the to-be-detected product and the standard embedding information, acquiring a to-be-printed sample image and identification information of the to-be-printed sample image (S401);
determining the sample embedding information according to the identification information (S402);
embedding, through an information embedding model, the sample embedding information into the to-be-printed sample image to obtain a to-be-printed embedded image, wherein the information embedding model is obtained by training according to a to-be-printed training image and training embedding information corresponding to the to-be-printed training image (S403);
sending the to-be-printed embedded image to a printing device to enable the printing device to print the to-be-printed embedded image to obtain a sample printed product and to enable the printing device to copy the sample printed product to obtain a sample copy product (S404); and
acquiring the image of the sample printed product and the image of the sample copy product (S405);
wherein the information embedding model is obtained by training in a following manner:
embedding, through an initial embedding model, the training embedding information into the to-be-printed training image to obtain a training embedded image;
determining a difference degree between the to-be-printed training image and the training embedded image; and
training, according to the difference degree, the initial embedding model to obtain the information embedding model.

2. The method of claim 1, wherein detecting, according to the target image information and the standard embedding information, whether the to-be-detected product is the copy product comprises:
determining a target information consistency rate between the target image information and the standard embedding information (S203); and
determining, according to the target information consistency rate, whether the to-be-detected product is the copy product (S204).

3. The method of claim 2, wherein,
each of the target image information and the standard embedding information is in a form of matrix, and
determining the target information consistency rate between the target image information and the standard embedding information comprises:
for each of a plurality of target image elements in the target image information, determining a respective one of a plurality of standard embedding elements in the standard embedding information which is at a same position as the target image element;
comparing a value of the target image element with a value of the respective standard embedding element to obtain a comparison result; and
determining, according to the comparison result, the target information consistency rate between the target image information and the standard embedding information.

4. The method of claim 1, wherein the image information extraction model is obtained by training in a following manner:
performing, through an initial extraction model, information extraction on the image of the sample printed product to obtain first image information (S301);
performing, through the initial extraction model, information extraction on the image of the sample copy product to obtain second image information (S302); and
training, according to the first image information, the second image information and the sample embedding information, the initial extraction model to obtain the image information extraction model (S303).

5. The method of claim 4, wherein training, according to the first image information, the second image information and the sample embedding information, the initial extraction model to obtain the image information extraction model comprises:
determining a first information consistency rate between the first image information and the sample embedding information and a second information consistency rate between the second image information and the sample embedding information; and
training, with a purpose of maximizing the first information consistency rate and minimizing the second information consistency rate, the initial extraction model to obtain the image information extraction model.

6. An electronic device, comprising:
at least one processor;
a memory communicatively connected to the at least one processor;
wherein the memory stores a computer program executable by the at least one processor, and the computer program, when executed by the at least one processor, causes the at least one processor to perform the method for detecting the copy product of any one of claims 1 to 5.

7. A computer-readable storage medium storing a computer instruction, wherein the computer instruction is configured to, when executed by a processor, implement the method for detecting the copy product of any one of claims 1 to 5.

## Patentansprüche

1. Verfahren zum Erkennen eines Kopieprodukts, umfassend:
Erfassen eines Bilds eines zu erkennenden Produkts und von Standardeinbettungsinformationen (S101, S201, S304, S406);
Durchführen einer Informationsextraktion an dem Bild über ein Bildinformationenextraktionsmodell, um Zielbildinformationen in dem Bild zu erhalten, wobei das Bildinformationenextraktionsmodell durch Trainieren gemäß einem Bild eines gedruckten Musterprodukts, von Mustereinbettungsinformationen des gedruckten Musterprodukts und einem Bild eines Musterkopieprodukts erhalten wird und das Musterkopieprodukt durch Kopieren des gedruckten Musterprodukts erhalten wird (S102, S202, S305, S407), und
Erkennen gemäß den Zielbildinformationen und den Standardeinbettungsinformationen, ob das zu erkennende Produkt das Kopieprodukt ist (S103, S306, S408),
wobei das Verfahren **dadurch gekennzeichnet ist, dass** es ferner Folgendes umfasst:
vor dem Erfassen des Bilds des zu erkennenden Produkts und der Standardeinbettungsinformationen Erfassen eines zu druckenden Musterbilds und von Identifikationsinformationen des zu druckenden Musterbilds (S401);
Bestimmen der Mustereinbettungsinformationen gemäß den Identifikationsinformationen (S402);
Einbetten der Mustereinbettungsinformationen über ein Informationeneinbettungsmodell in ein zu druckendes Musterbild, um ein zu druckendes eingebettetes Bild zu erhalten, wobei das Informationeneinbettungsmodell durch Trainieren gemäß einem zu druckenden Trainingsbild und Trainingseinbettungsinformationen entsprechend dem zu druckenden Trainingsbild erhalten wird (S403);
Senden des zu druckenden eingebetteten Bilds an eine Druckvorrichtung, um der Druckvorrichtung zu ermöglichen, das zu druckende eingebettete Bild zu drucken, um ein gedrucktes Musterprodukt zu erhalten, und der Druckvorrichtung zu ermöglichen, das gedruckte Musterprodukt zu kopieren, um ein Musterkopieprodukt zu erhalten (S404), und
Erfassen des Bilds des gedruckten Musterprodukts und des Bilds des Musterkopieprodukts (S405),
wobei das Informationeneinbettungsmodell durch Trainieren auf folgende Weise erhalten wird:
Einbetten der Trainingseinbettungsinformationen über ein initiales Einbettungsmodell in das zu druckende Trainingsbild, um ein eingebettetes Trainingsbild zu erhalten;
Bestimmen eines Differenzgrads zwischen dem zu druckenden Trainingsbild und dem eingebetteten Trainingsbild und
Trainieren des initialen Einbettungsmodells gemäß dem Differenzgrad, um das Informationeneinbettungsmodell zu erhalten.

2. Verfahren nach Anspruch 1, wobei das Erkennen gemäß den Zielbildinformationen und den Standardeinbettungsinformationen, ob das zu erkennende Produkt das Kopieprodukt ist, Folgendes umfasst:
Bestimmen einer Zielinformationenübereinstimmungsrate zwischen den Zielbildinformationen und den Standardeinbettungsinformationen (S203) und
Bestimmen gemäß der Zielinformationenübereinstimmungsrate, ob das zu erkennende Produkt das Kopieprodukt ist (S204).

3. Verfahren nach Anspruch 2, wobei
die Zielbildinformationen und die Standardeinbettungsinformationen jeweils die Form einer Matrix aufweisen und
das Bestimmen der Zielinformationenübereinstimmungsrate zwischen den Zielbildinformationen und den Standardeinbettungsinformationen Folgendes umfasst:
für jedes einer Vielzahl von Zielbildelementen in den Zielbildinformationen Bestimmen eines jeweiligen einer Vielzahl von Standardeinbettungselementen in den Standardeinbettungsinformationen, das sich an derselben Position wie das Zielbildelement befindet;
Vergleichen eines Werts des Zielbildelements mit einem Wert des jeweiligen Standardeinbettungselements, um ein Vergleichsergebnis zu erhalten, und
Bestimmen der Zielinformationenübereinstimmungsrate zwischen den Zielbildinformationen und den Standardeinbettungsinformationen gemäß dem Vergleichsergebnis.

4. Verfahren nach Anspruch 1, wobei das Bildinformationenextraktionsmodell durch Trainieren auf folgende Weise erhalten wird:
Durchführen einer Informationsextraktion an dem Bild des gedruckten Musterprodukts über ein initiales Extraktionsmodell, um erste Bildinformationen zu erhalten (S301);
Durchführen einer Informationsextraktion an dem Bild des Musterkopieprodukts über das initiale Extraktionsmodell, um zweite Bildinformationen zu erhalten (S302), und
Trainieren des initialen Extraktionsmodells gemäß den ersten Bildinformationen, den zweiten Bildinformationen und den Mustereinbettungsinformationen, um das Bildinformationenextraktionsmodell (S303) zu erhalten.

5. Verfahren nach Anspruch 4, wobei das Trainieren des initialen Extraktionsmodells gemäß den ersten Bildinformationen, den zweiten Bildinformationen und den Mustereinbettungsinformationen, um das Bildinformationenextraktionsmodell zu erhalten, Folgendes umfasst:
Bestimmen einer ersten Informationenübereinstimmungsrate zwischen den ersten Bildinformationen und den Mustereinbettungsinformationen und einer zweiten Informationenübereinstimmungsrate zwischen den zweiten Bildinformationen und den Mustereinbettungsinformationen und
Trainieren des initialen Extraktionsmodells mit einem Zweck, die erste Informationenübereinstimmungsrate zu maximieren und die zweite Informationenübereinstimmungsrate zu minimieren, um das Bildinformationenextraktionsmodell zu erhalten.

6. Elektronische Vorrichtung, umfassend:
mindestens einen Prozessor;
einen Speicher, der kommunikativ mit dem mindestens einen Prozessor verbunden ist,
wobei der Speicher ein Computerprogramm speichert, das durch den mindestens einen Prozessor ausführbar ist, und das Computerprogramm bei Ausführung durch den mindestens einen Prozessor bewirkt, dass der mindestens eine Prozessor das Verfahren zur Erkennung des Kopieprodukts nach einem der Ansprüche 1 bis 5 durchführt.

7. Computerlesbares Speichermedium, das eine Computeranweisung speichert, wobei die Computeranweisung ausgelegt ist, um bei Ausführung durch einen Prozessor das Verfahren zur Erkennung des Kopieprodukts nach einem der Ansprüche 1 bis 5 zu implementieren.

## Revendications

1. Procédé de détection d'un produit de copie, comprenant :
l'acquisition d'une image d'un produit à détecter et d'informations d'incorporation standard (S101, S201, S304, S406) ;
la réalisation, au moyen d'un modèle d'extraction d'informations d'image, d'une extraction d'informations sur l'image pour obtenir des informations d'image cible dans l'image, dans lequel le modèle d'extraction d'informations d'image est obtenu par entraînement en fonction d'une image d'un produit imprimé échantillon, des informations d'incorporation d'échantillon du produit imprimé échantillon, et d'une image d'un produit de copie échantillon, et le produit de copie échantillon est obtenu par copie du produit imprimé échantillon (S102, S202, S305, S407) ; et
la détection, en fonction des informations d'image cible et des informations d'incorporation standard, si le produit à détecter est, ou n'est pas, le produit de copie (S103, S306, S408) ;
dans lequel le procédé est **caractérisé en ce qu'**il comprend en outre :
avant l'acquisition de l'image du produit à détecter et des informations d'incorporation standard, l'acquisition d'une image échantillon à imprimer et des informations d'identification de l'image échantillon à imprimer (S401) ;
la détermination des informations d'incorporation d'échantillon en fonction des informations d'identification (S402) ;
l'incorporation, au moyen d'un modèle d'incorporation d'informations, des informations d'incorporation d'échantillon dans l'image échantillon à imprimer pour obtenir une image incorporée à imprimer, dans lequel le modèle d'incorporation d'informations est obtenu par entraînement en fonction d'une image d'entraînement à imprimer et des informations d'incorporation d'entraînement correspondant à l'image d'entraînement à imprimer (S403) ;
l'envoi de l'image incorporée à imprimer à un dispositif d'impression pour permettre au dispositif d'impression d'imprimer l'image incorporée à imprimer pour obtenir un produit imprimé échantillon et pour permettre au dispositif d'impression de copier le produit imprimé échantillon pour obtenir un produit de copie échantillon (S404) ; et
l'acquisition de l'image du produit imprimé échantillon et de l'image du produit de copie échantillon (S405) ;
dans lequel le modèle d'incorporation d'informations est obtenu par entraînement de la manière suivante :
l'incorporation, au moyen d'un modèle d'incorporation initial, des informations d'incorporation d'entraînement dans l'image d'entraînement à imprimer pour obtenir une image incorporée d'entraînement ;
la détermination d'un degré de différence entre l'image d'entraînement à imprimer et l'image incorporée d'entraînement ; et
l'entraînement, en fonction du degré de différence, du modèle d'incorporation initial pour obtenir le modèle d'incorporation d'informations.

2. Procédé selon la revendication 1, dans lequel la détection, en fonction des informations d'image cible et des informations d'incorporation standard, si le produit à détecter est, ou n'est pas, le produit de copie comprend :
la détermination d'un taux de cohérence d'informations cible entre les informations d'image cible et les informations d'incorporation standard (S203) ; et
la détermination, en fonction du taux de cohérence d'informations cible, si le produit à détecter est le produit de copie (S204).

3. Procédé selon la revendication 2, dans lequel,
chacune des informations d'image cible et des informations d'incorporation standard est sous forme matricielle, et
la détermination du taux de cohérence d'informations cible entre les informations d'image cible et les informations d'incorporation standard comprend :
pour chacun d'une pluralité d'éléments d'image cible dans les informations d'image cible, la détermination d'un élément respectif parmi une pluralité d'éléments d'incorporation standard dans les informations d'incorporation standard qui est à la même position que l'élément d'image cible ;
la comparaison d'une valeur de l'élément d'image cible avec une valeur de l'élément d'incorporation standard respectif pour obtenir un résultat de comparaison ; et
la détermination, en fonction du résultat de comparaison, du taux de cohérence d'informations cible entre les informations d'image cible et les informations d'incorporation standard.

4. Procédé selon la revendication 1, dans lequel le modèle d'extraction d'informations d'image est obtenu par entraînement de la manière suivante :
la réalisation, au moyen d'un modèle d'extraction initial, d'une extraction d'informations sur l'image du produit imprimé échantillon pour obtenir des premières informations d'image (S301) ;
la réalisation, au moyen du modèle d'extraction initial, d'une extraction d'informations sur l'image du produit de copie échantillon pour obtenir des deuxièmes informations d'image (S302) ; et
l'entraînement, en fonction des premières informations d'image, des deuxièmes informations d'image et des informations d'incorporation d'échantillon, du modèle d'extraction initial pour obtenir le modèle d'extraction d'informations d'image (S303).

5. Procédé selon la revendication 4, dans lequel l'entraînement, en fonction des premières informations d'image, des deuxièmes informations d'image et des informations d'incorporation d'échantillon, du modèle d'extraction initial pour obtenir le modèle d'extraction d'informations d'image comprend :
la détermination d'un premier taux de cohérence d'informations entre les premières informations d'image et les informations d'incorporation d'échantillon et d'un deuxième taux de cohérence d'informations entre les deuxièmes informations d'image et les informations d'incorporation d'échantillon ; et
l'entraînement, en vue de maximiser le premier taux de cohérence d'informations et de minimiser le deuxième taux de cohérence d'informations, du modèle d'extraction initial pour obtenir le modèle d'extraction d'informations d'image.

6. Dispositif électronique, comprenant :
au moins un processeur ;
une mémoire reliée en communication à l'au moins un processeur ;
dans lequel la mémoire stocke un programme informatique exécutable par l'au moins un processeur, et le programme informatique, lorsqu'il est exécuté par l'au moins un processeur, amène l'au moins un processeur à réaliser le procédé de détection du produit de copie selon l'une quelconque des revendications 1 à 5.

7. Support de stockage lisible par ordinateur stockant une instruction informatique, dans lequel l'instruction informatique est configurée, lorsqu'elle est exécutée par un processeur, pour mettre en œuvre le procédé de détection du produit de copie selon l'une quelconque des revendications 1 à 5.
